# EUROPEAN PATENT SPECIFICATION

(11) **EP 3 712 523 B1**
(45) Date of publication and mention of the grant of the patent: **12.10.2022**
(21) Application number: 20163818.6
(22) Date of filing: 18.03.2020
(51) Int. Cl.: F24F 3/16, F24F 13/20

(54) **AIR PURIFYING SYSTEM**
LUFTREINIGUNGSSYSTEM
SYSTÈME DE PURIFICATION D'AIR

(30) Priority: 19.03.2019 KR 20190031445
(43) Date of publication of application: 23.09.2020
(73) Proprietor: LG Electronics Inc., Seoul 07336 (KR); Chungang University Industry Academic Cooperation Foundation, Seoul 06974 (KR)
(72) Inventor: KANG, Jiyoung, 08592 Seoul (KR); CHUNG, Haeyoong, 08592 Seoul (KR); JEON, Jongkeon, 08592 Seoul (KR); LEE, David Kangseong, 08592 Seoul (KR); KWAK, Daeyoung, 06904 Seoul (KR); PARK, Sohee, 06985 Seoul (KR)
(74) Representative: Vossius & Partner Patentanwälte Rechtsanwälte mbB

(56) References cited:
- CN-A- 1 752 617
- CN-A- 107 270 391
- CN-U- 204 858 756
- KR-A- 20080 051 976
- KR-B1- 101 698 045
- US-B1- 6 466 737

## Description

The present invention relates to an air purifying system.

The air purifying apparatus is an apparatus which suctions contaminated air to purify the contaminated air, and then discharges purified air. For example, the air purifying apparatus may include a blowing device which flows outside air into the interior of the air purifying apparatus and discharges the outdoor air to the outside, and a filter capable of filtering dust, bacteria, and the like. Generally, an air purifying apparatus is configured to purify an indoor space such as a home or office.

The air purifying apparatus is manufactured to a predetermined standard and size according to a predetermined design and supplied to the market. The consumer purchases an air purifying apparatus that matches the size and capacity desired.

KR 2008 0051976 A relates to an indoor unit for an air conditioner comprising a blowing unit, a purifying unit, and a heat exchanging unit. The blowing unit produces a current of air to suck and discharge indoor air. The purifying unit 200 sucks indoor air to purify the sucked air. The heat exchanging unit allows indoor air to transfer heat using refrigerant. A seating groove is formed in the top frame of the heat exchanging unit so that a fixing part of the purification unit can be inserted into the fixing groove when the purification unit is stacked on the upper side of the heat exchanging unit.

CN 107 270391 A relates to an air conditioner unit capable of being split and assembled, comprising at least two air conditioners, wherein each air conditioner comprises a first connector and a second connector; and the first connector of each air conditioner is detachably connected with the second connector of another adjacent air conditioner, so that the air conditioners can be connected with each other.

CN 1 752 617 A relates to an air purifier having a first air purification unit, and at least one second air purification unit that is modularly assembled on the upper or lower part of the first air purification unit.

It is difficult for a consumer to purchase an air purifying apparatus suited to his or her residential environment due to the presence of a plurality of partitioned indoor spaces and the shape of an atypical indoor space in his or her residential environment.

To solve this problem, a modular air purifying apparatus is implemented in WO 200400108248 A2 modular air purification system. This technique discloses a technique capable of modularizing a filter member or the like in response to an installation environment of an air purifying apparatus, but this can be done only by an expert, and cannot be performed by a general user.

The present invention is proposed under the background above and proposes an air purifying system which is capable of variously operating the air purifying apparatus in accordance with the residential environment of a consumer by using a single air purifying system.

The present invention proposes an air purifying system which can always provide an indoor space comfortably regardless of the user's recognition in order to improve the user's health.

The present invention proposes an air purifying system which can be handled conveniently by a user.

The air purifying system according to the present invention includes: a cradle having an upper seating surface which is a flat upper surface; at least one seating groove formed by the upper seating surface being recessed downward; a seating plate which lifts and lowers within the seating groove; and at least one mobile air purifying apparatus in which the base is seated on the seating plate. According to the present invention, it is possible to prevent equipment placed inside the seating groove from being reversed. As the seating plate is lifted and lowered, the convenience of use of the cradle can be improved in a state where the seating plate is lifted and lowered, and the reversal of the mobile air purifying apparatus can be prevented in a state where the seating plate is lowered.

A lifting and lowering induction device which is provided between the seating plate and the seating groove and induces stable movement of the seating plate is included so that the weight of the seating plate can be supported by the movable air purifying apparatus when the seating plate is lifted and it can move smoothly downward when the seating plate is lowered.

The lifting and lowering induction device is provided at least two places on the edge of the seating plate so that the entire lifting and lowering of the seating plate can be induced.

The lifting and lowering induction device includes an elastic member which provides a force for pushing the seating plate upward when the seating plate is moved to the lower side so that a smooth seating action can be guided when the mobile air purifying apparatus is seated.

The seating plate may be provided with a seating sensor for detecting the seating of the mobile air purifying apparatus so that when the mobile air purifying apparatus and the cradle interact with each other, the seating of the mobile air purifying apparatus may be notified to the control unit. The notified information can be utilized as control information of the cradle and the mobile air purifying apparatus. For example, the charging operation of the mobile air purifying apparatus can be performed.

The cradle is provided as a fixed air purifying apparatus provided with a fan and a filter, and in this case, the air cleaning action can be performed more quickly and in a more various manner by the interaction of the mobile air purifying apparatus and the fixed air purifying apparatus, and thus the satisfaction of the user can be improved.

The cradle may be elongated in the lateral direction, and the seating groove and the seating plate may be provided on the left and right of the cradle, respectively. According to this, it is possible to operate the air purifying system more suitably in response to various and individual user's needs for clean air.

According to the present invention, at least two air purifying apparatus suitable for each of the plurality of indoor spaces partitioned are integrally implemented in a single air purifying system. According to this, it is possible to supply clean air suitable for the plurality of indoor spaces at the same time.

According to the present invention, a low-power, the no-wind operation mode can be implemented by an air purifying apparatus. Thereby, the user can always suction clean air without the need to separately intervene in the operation of the air purifying apparatus.

The present invention is made in a size which can be carried by a person and is provided with a handle so that the user can conveniently move the air purifying apparatus. Thus, the air purifying apparatus can be used by conveniently moving to various indoor spaces.

According to the present invention, it is possible to prevent the reversal of the mobile air purifying apparatus, and the user can more conveniently handle the mobile air purifying apparatus.

### BRIEF DESCRIPTION OF THE DRAWINGS

Fig. 1 is a perspective view illustrating an air purifying system according to an embodiment.
Fig. 2 is a perspective view illustrating a fixed air purifying apparatus.
Figs. 3 and 4 are views illustrating the use of the mobile air purifying apparatus, Fig. 3 is in a state of being placed in a kitchen, and Fig. 4 is in a state of being placed in a study room.
Fig. 5 is a schematic sectional view illustrating the mobile air purifying apparatus.
Fig. 6 is a schematic sectional view of A-A' of Fig. 2.
Fig. 7 is a schematic sectional view of B-B' of Fig. 2.
Fig. 8 is a block diagram illustrating the fixed air purifying apparatus.
Fig. 9 is a view for explaining an operation of a no-wind operation mode;
Fig. 10 is a plan view illustrating a display of the mobile air purifying apparatus.
Fig. 11 is a perspective view illustrating the fixed air purifying apparatus according to another embodiment.
Fig. 12 is a view illustrating the use state of the seating plate.
Fig. 13 is a partially cutaway sectional view illustrating the upper seating surface.
Figs. 14 to 16 are views for explaining a lifting and lowering induction device, Fig. 14 is an exploded perspective view illustrating the lifting and lowering induction device, Fig. 15 is a sectional view illustrating the lifting and lowering induction device, and Fig. 16 is a perspective view illustrating the lifting and lowering induction device.
Fig. 17 is a view illustrating a state where the seating plate is moved to the lower side due to the weight of the mobile air purifying apparatus.

### DETAILED DESCRIPTION OF THE EMBODIMENTS

Hereinafter, specific embodiments of the present invention will be described in detail with reference to the drawings. However, the idea of the present invention is not limited to the embodiments illustrated below, and those skilled in the art who understands the idea of the present invention can readily suggest other embodiments included within the scope of the same idea by adding, changing, deleting, and adding components, but it can be said that the present invention is also included within the scope of the present invention.

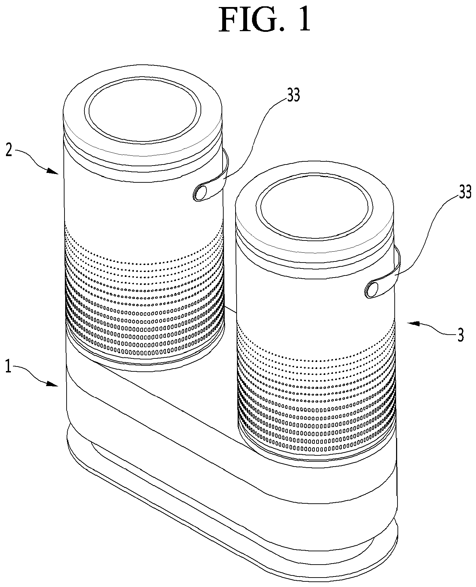

Fig. 1 is a perspective view illustrating an air purifying system according to an embodiment.

Referring to Fig. 1, the air purifying system according to the embodiment includes at least two air purifying apparatus 2 and 3 capable of independently operating, and a cradle 1 which can seat at least two air purifying apparatus 2 and 3. Since the cradle 1 can not only seat the at least two air purifying apparatus 2 and 3 but also can perform functions of an air purifying apparatus in a fixed state, the cradle can be referred to as a fixed air purifying apparatus 1.

The at least two air purifying apparatus 2 and 3 can be supplied with energy in a state of being seated in the fixed air purifying apparatus 1. The at least two air purifying apparatus 2 and 3 may have a weight and a size which can be conveniently carried and moved by a user. The at least two air purifying apparatus 2 and 3 can be referred to as mobile air purifying apparatus 2 and 3 since it can be a main usage mode to move the at least two air purifying apparatus 2 and 3 to another space partitioned in the room.

A handle 33 may be provided on the upper portion of the mobile air purifying apparatus 2 and 3 for convenient movement of the mobile air purifying apparatus 2 and 3.

The fixed air purifying apparatus 1 can be placed and used in the largest living room among a plurality of spaces in the room. The living room is a space in which the user lives a main life, and is the widest among the various indoor spaces to be divided, and is the area having the greatest air purifying load due to much movement of people.

The mobile air purifying apparatus 2, 3 can be used in a limited space, a closed space, and a space which is not relatively wide, such as a kitchen, a study room, a bedroom, or the like.

In a case where the intensive and efficient air purifying operation for the wide space is required, the mobile air purifying apparatus 2 and 3 can be used in a state of being seated on the fixed air purifying apparatus 1. In this case, a quick and rapid air purifying operation can be performed on a wide space.

The air purifying capacity of the fixed air purifying apparatus 1 and the mobile air purifying apparatus 2 and 3 per unit time may be provided as a fixed air purifying apparatus: a first mobile air purifying apparatus: a second mobile air purifying apparatus = 4: 3: 3. In other words, when the air purifying capacity of the entire air purifying system is 100, the fixed air purifying apparatus 1 can occupy 40% and each of the mobile air purifying apparatus 2 and 3 can occupy 30%.

The air purifying capacity does not depend on the three-dimensional size of the simple indoor space. The air purifying capacity has been proposed in consideration of the three-dimensional size of the indoor space, the preferred operation mode of the fixed air purifying apparatus 1, and the preferable operation mode of the mobile air purifying apparatus 2 and 3.

Preferred operation modes of the fixed air purifying apparatus 1 and the mobile air purifying apparatus 2 and 3 will be described later.

The fixed air purifying apparatus 1 may be provided in a long shape in the lateral direction with respect to the front surface mainly observed by the user. The mobile air purifying apparatus may be provided with a first mobile air purifying apparatus 2 placed on the left side of the fixed air purifying apparatus 1 and a second mobile air purifying apparatus 3 placed on the right side of the fixed air purifying apparatus 1.

A handle 33 is provided on the upper portion of the mobile air purifying apparatus 2 and 3, and a user can move or handle the mobile air purifying apparatus by holding the handle. The handle may be fixed to the upper portion of the mobile air purifying apparatus by a hinge structure. The handle 33 is rotatable and supported on the lower side of the side outer discharge portion of the main body so as not to be capable of interfering with the air discharge.

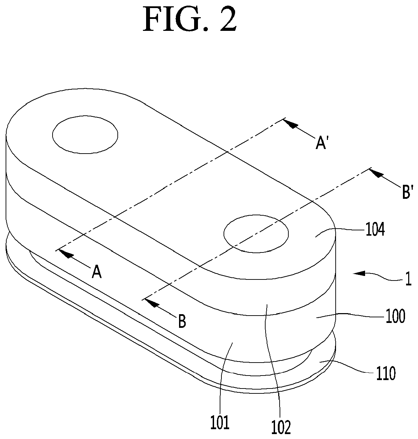

Fig. 2 is a perspective view illustrating the fixed air purifying apparatus.

Referring to Fig. 2, the fixed air purifying apparatus 1 includes an outer wall 100 provided as an enclosure which is long in the lateral direction, has a predetermined height, and has an elliptical horizontal section, a suction port 110 provided below the outer wall 100, and an upper seating surface 104 providing a flat upper surface of the enclosure and seating the mobile air purifying apparatus 2 and 3. At the upper seating surface 104, at least a portion of the surface thereof on which the mobile air purifying apparatus 2 and 3 is placed may be provided flat.

The outer wall may be provided longer than front and rear in the lateral direction. In the inner space of the outer wall, a plurality of fans can be received and spaced apart from each other in the lateral direction. Three fans may preferably be provided as an example.

The outer wall 100 may be divided into a closed wall 101 and a discharge wall 102. The closed wall 101 is an area where air cannot pass directly, and the discharge wall 102 is an area performing a discharge operation that air is passed therethrough and the air is discharged to the outside. A purpose of the interposition of the closed wall 101 between the discharge wall 102 and the suction port 110 is to suppress the suction of the air discharged through the discharge wall 102 directly to the suction port 110 as much as possible.

Since the clean air discharged through the discharge wall 102 is airflow having a low flow rate, the closed wall 101 may be further required.

The fixed air purifying apparatus 1 can be placed in a living room and can be performed in a 24-hour air purifying operation mode. Since the fixed air purifying apparatus 1 can be operated at a low flow rate and low noise, a user in the living room may not be able to recognize the operation of the fixed air purifying apparatus 1. The low flow rate and low noise operation mode of the fixed air purifying apparatus 1 can be said to be the no-wind mode. Details of the no-wind mode will be described later. The 24-hour air purifying operation mode may be performed by a specific operation mode of the fixed air purifying apparatus 1.

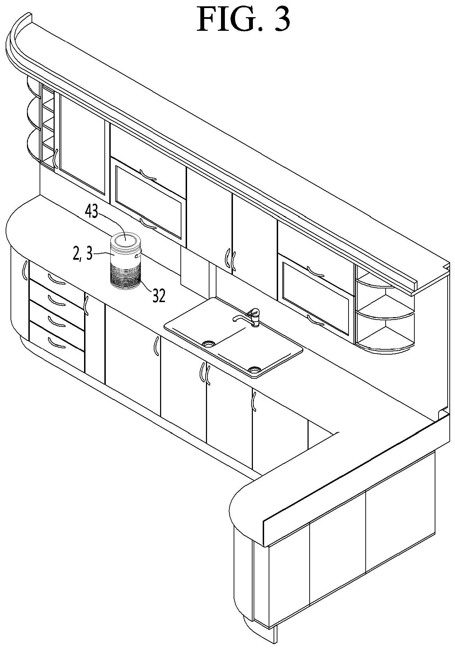

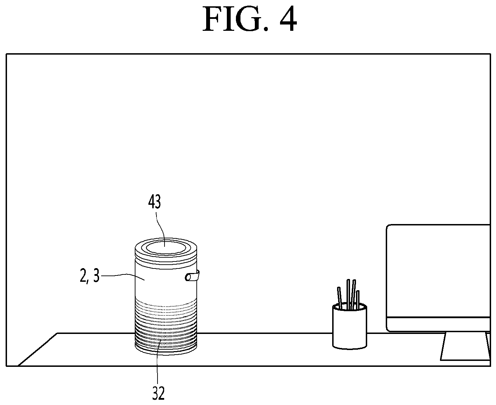

Fig. 3 and Fig. 4 illustrate the use of the mobile air purifying apparatus, Fig. 3 illustrates a state of being placed on the kitchen, and Fig. 4 illustrates a state of being placed on the study room.

The mobile air purifying apparatus 2 and 3 may be provided with a wide suction portion 32 and an air guide 43 for adjusting the discharge direction of clean air. According to this configuration, a large amount of air can be quickly transferred in the desired direction.

The mobile air purifying apparatus 2 and 3 can quickly perform an air purifying function at the desired place.

For example, as illustrated in Fig. 3, smoke generated during cooking food in the kitchen can be suctioned into the suction portion 32 and filtered. Clean air filtered with contaminants can be blown to the cooker by the air guide 43.

As another example, as illustrated in Fig. 4, in a highly contaminated environment, clean air can be quickly blown to a learner.

The user can hold the handle 33 of the mobile air purifying apparatus 2 and 3 and move the mobile air purifying apparatus conveniently. The user can hold and move the mobile air purifying apparatus 2 and 3, which is seated on the upper surface of the fixed air purifying apparatus 1 and can operate the air purifying apparatus by placing the air purifying apparatus at the desired position. The mobile air purifying apparatus 2 and 3 may be charged from the fixed air purifying apparatus 1 while being placed on the fixed air purifying apparatus 1 or may be provided with a separate plug to receive power from a commercial power source.

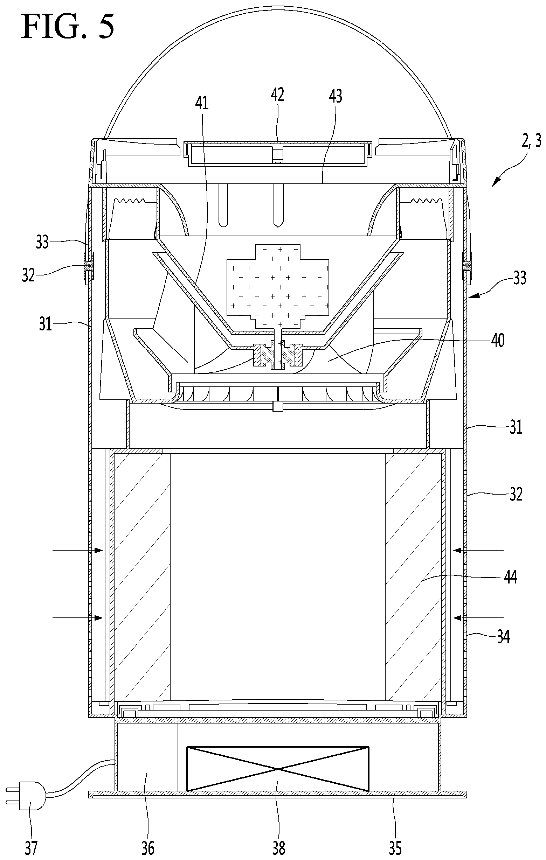

Fig. 5 is a sectional view illustrating the mobile air purifying apparatus.

Referring to Fig. 5, the mobile air purifying apparatus 2 and 3 may be provided in a generally upright cylindrical shape, and a base 35 for seating may be provided at the lower end portion.

The mobile air purifying apparatus 2 and 3 may suction outside air from the lower portion, filter out foreign matter and blow air from the upper portion to the outside. The foreign matter may include dust, bacteria, and the like. Specifically, a suction portion 32 having a plurality of holes is positioned below the outer wall 31 of the mobile air purifying apparatus 2 and 3 to suction the outside air. At the upper portion of the outer wall 31, a closing portion 33 for closing the outer wall is positioned, so that the flow of air can be blocked.

A number of suction holes 34 having a diameter of several tens of millimeters to several millimeters may be formed in the suction portion 32. The outside air is suctioned together with foreign matter through the suction hole 34. The outside air suctioned through the suction hole 34 flows upward after the foreign matter is filtered by the filter 44 in the outside air.

A filter 44, a fan 41 supported by the fan housing 40, and an air guide 43 for adjusting the blowing direction are placed in the inner space of the movable air purifying apparatus 2 and 3. The clean air passing through the filter 44 can be blown by adjusting the wind direction by the air guide 43, by negative pressure provided by the fan 41.

Power can be supplied to the mobile air purifying apparatus 2 and 3 by a using power source or a wireless charging method. A display 42 is provided on the upper surface of the mobile air purifying apparatus 2 and 3 to display the operating state of the mobile air purifying apparatus.

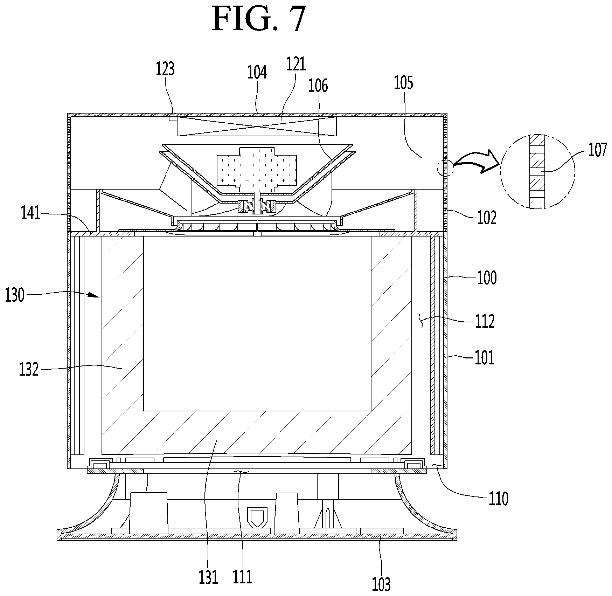

A second wireless charging module 38 may be disposed on the upper surface of the base 35. The second wireless charging module 38 may be positioned as close to the bottom surface of the base 35 as much as possible. The second wireless charging module 38 can receive power from the first wireless charging module (see 121 in Fig. 7) on the upper surface of the fixed air purifying apparatus 1. The supplied electric energy may be stored in a battery (not illustrated) or the like.

A receiving space 36 in which electric wires including a plug 37 are received can be provided on the base 35 to supply power to the mobile air purifying apparatus 2 and 3.

A handle 33 is provided at an upper-end portion of the outer wall 31 so that the user can easily hold and move the mobile air purifying apparatus 2 and 3. The handle 33 is fixed to the outer wall 31 and is rotatable by the hinge 32. The handle 33 is lifted to the upper side when the user uses the handle and is lowered when the user does not use the handle. The handle may not interfere with the airflow of the air purifying apparatus.

The mobile air purifying apparatus 2 and 3 can be directly blown by the fan 41 and the wind direction can be adjusted to the air guide 43 in the desired direction. For example, clean air can be provided at a predetermined wind speed directly to a user who desires clean air. The mobile air purifying apparatus 2 and 3 may be referred to as a direct air blow-type air purifying apparatus.

On the other hand, since the fixed air purifying apparatus 1 is operated in the no-wind mode as described above, and can indirectly provide clean air to the user, the fixed air purifying apparatus 1 can be regarded as an indirect air blow-type air purifying apparatus.

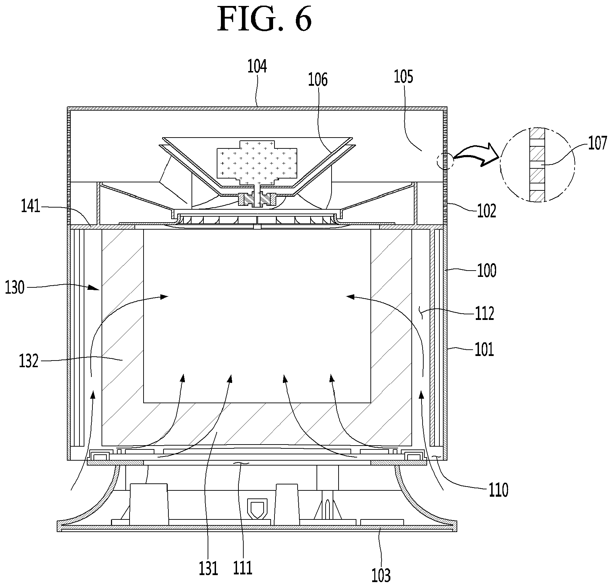

Fig. 6 is a schematic sectional view of A-A' of Fig. 2, and a vertical sectional view illustrating a portion of the fixed air purifying apparatus where the mobile air purifying apparatus is not placed.

Referring to Fig. 6, the fixed air purifying apparatus 1 includes an outer wall 100 extending in the vertical direction, and a base 103 which is spaced downward from the lower end of the outer wall by a predetermined interval and forms the bottom portion of the fixed air purifying apparatus 1.

The interval portion between the base 103 and the outer wall 100 forms a suction port 110 and the outside air can be suctioned into the fixed air purifying apparatus 1 together with foreign matter.

The outside air suctioned through the suction port 110 is guided to the filter 130. The filter 130 includes a lower portion 131 and a side portion 132. The air introduced through the suction port 110 is suctioned by being separated by the suction flow path. The suction flow path may include a second suction flow path 111 for guiding the suction air to the lower portion 131 and a first suction flow path 112 for guiding the suction air to the side portion 132.

The second suction flow path 111 may be defined as an interval between the base 103 and the lower portion 131 of the filter. The first suction flow path 112 may be defined as an interval between the outer wall 100 and the side portion 132 of the filter.

Since the filter 130 can have a suction area for a wider outside air, the flow path resistance is reduced and according to this, the noise reduction effect is obtained. In addition, more air can be filtered per unit time.

Since the outside air is suctioned by the negative pressure in the inner space of the filter 130, all the suction flow paths 111 and 112 can perform the function of the suction flow path.

The outer wall 100 defining the outer wall of the first suction flow path 112 constitutes the closed wall 101 and the outside air may not be suctioned through the closed wall 101. The reason why the closed wall 101 is provided is that the clean air discharged through the discharge wall 102 through which the clean air is discharged is not directly suctioned. According to this, the foreign matter filtering effect of the outside air by the filter 130 can be improved.

In other words, the outer wall 100 is divided into a lower closed wall 101 and an upper discharge wall 102. The outside air containing foreign matter is suctioned through the suction port 110 having an interval at the lower side of the closing wall 101 and the clean air obtained by filtering the foreign matter is discharged through the discharge wall 102. The closing wall 101 provides an interval between the suction port 110 and the discharge wall 102.

A fan housing 105 and a fan 106 driven inside the fan housing 105 are disposed above the filter. The upper-end of the outer wall 100 is closed by the upper seating surface 104. The mobile air purifying apparatus 2 and 3 can be placed in a state where the upper surface of the upper seating surface 104 is closed.

The fan 106 provides negative pressure. The outside air filtered through the lower filter 130 is discharged by the fan 106 to a peripheral portion of the fan. The air discharged by the fan 106 is discharged through a plurality of micro-holes 107 formed in the discharge wall 102.

It is preferable that the clean air output through the fan 106 is not leaked or mixed with the suction flow path. To this end, the upper-end portion of the discharge wall 102 may be sealed with the edge of the upper seating surface 104. The inner frame 141 may be sealed with the inner surface of the outer wall 100. The point where the inner frame 141 meets the outer wall 100 may be a boundary between the discharge wall 102 and the closing wall 101.

The micro-hole 107 may be configured to discharge the clean air introduced by the fan 106 into the indoor space at a predetermined flow rate or less. Here, the introduction of clean air may mean that purified clean air obtained by purifying foreign matter, is transferred to the micro-hole 107 through the fan 106. Specifically, the micro-hole 107 can be provided in a small micro-unit with a diameter of about 1 millimeter or less. The micro-holes in the drawings are illustrated to be larger exaggeratedly for clarity.

The micro-hole 107 is different from the suction hole 34 provided in the mobile air purifying apparatus in that the suction hole is in the range of several millimeters to several tens of millimeters.

A plurality of the micro-holes 107 may be formed on the discharge wall 102, and one hundred thousand or more of the micro-holes 107 may be provided. Preferably about several hundreds of thousands may be provided. Preferably, when the clean air passes through the micro-hole 107, the flow rate of clean air may be 0.25 m/s or less, preferably 0.15 m/s or less.

The clean air blown at this time may be referred to as a no-wind state, which is difficult for the user to feel the wind. Since the operation of discharging clean air at such a minute flow rate is possible, the fixed air purifying apparatus 1 can be said to be capable of performing a no-wind operation mode.

In the no-wind operation mode, the flow rate of the clean air is low and no sound is generated, and the power consumption is also small due to the low rotation speed of the fan 106. The user may not be able to recognize the no-wind operation mode. Therefore, the no-wind operation mode can be operated in a 24-hour air purifying mode in which the fixed air purifying apparatus is continuously operated.

The fixed air purifying apparatus may be driven in a wind operation mode which is different from the no-wind operation mode.

By rotating the fan 106 at a high speed, the flow rate of the clean air discharged through the micro-hole 107 can exceed 0.25 m/s. In this case, the user can recognize the wind by sound and skin contact.

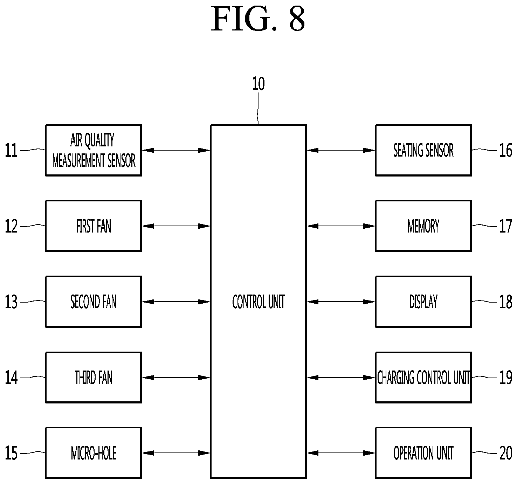

The control unit (see 10 in Fig. 8) of the fixed air purifying apparatus 1 can control the rotational speed of the fan 106. For example, rapid air cleaning may need to be performed, such as in a case where the indoor air quality is significantly poor. Conversely, the quality of the indoor air may be perfectly clean and thus minimal air cleaning may need to be performed. In this case, the rotational speed of the fan 106 can be adjusted.

When the control unit 10 is operated, the rotational speed of the fan 106 can be controlled based on a state of the indoor air sensed by the air quality measurement sensor (see 11 in Fig. 8).

Specifically, if the sensed air quality is better than the predetermined air quality, the control unit 10 can decrease the rotation speed of the fan 106, and if the sensed air quality is worse than the predetermined air quality, the control unit can increase the rotation speed of the fan 106. According to this, the flow rate of air to be purified can be controlled.

As a result, under the control of the control unit 10, the rotational speed of the fan 106 is controlled, and the fixed air purifying apparatus 1 can be operated in a state where predetermined air quality by the user is maintained.

Fig. 7 is a schematic sectional view of B-B' of Fig. 2 and is a vertical sectional view illustrating a portion on which the mobile air purifying apparatus 2 and 3 are placed.

Referring to Fig. 7, a first wireless charging module 121 corresponding to the second wireless charging module 38 is provided to a portion of the upper seating surface 104 on which the mobile air purifying apparatus 2 and 3 are placed. The first wireless charging module 121 may be provided on both left and right sides of the fixed air purifying apparatus 1 one by one.

The first wireless charging module 121 can supply energy wirelessly to the second wireless charging module 38 when the mobile air purifying apparatus 2 and 3 is seated on the upper seating surface 104. Accordingly, when the mobile air purifying apparatus 2 and 3 are seated at the predetermined position of the fixed air purifying apparatus 1, the mobile air purifying apparatus 2 and 3 can be wirelessly charged.

A seating sensor 123 may be provided at a position adjacent to the first wireless charging module 121 to detect the seating of the mobile air purifying apparatus 2 and 3. When the seating sensor 123 detects the seating of the mobile air purifying apparatus 2 and 3, the wireless charging modules 121 and 38 can interlock with each other and perform a wireless charging operation.

A second fan 131 and a second fan housing 132 may be provided on the lower side of the first wireless charging module 121. The second fan 131 and the second fan housing 132 may be provided on both left and right sides of the fixed air purifying apparatus 1, respectively. As a result, the fixed air purifying apparatus 1 may be provided with three fans and three fan housings.

The second fan 131 and the second fan housing 132 may perform the same operations as those of the fan 106 and the fan housing 105. For example, it is possible to provide negative pressure on the airflow path to suction the outside air, to filter the foreign matter through the filter 130, and to discharge clean air through the micro-hole 107. The fan 106 and the fan housing 105 may be referred to as a first fan 106 and a first fan housing 105 as compared to the second fan 131 and the second fan housing 132.

The second fan 131 and the second fan housing 132 can operate when a strong purifying operation and a strong wind speed are required.

For example, when a normal level of air purifying function is performed, first, the first fan 106 and the first fan housing 105 can be operated. The second fan 131 and the second fan housing 132 can be operated together with the operation of the first fan 106 and the first fan housing 105 when a strong air purifying function is performed.

The operation of the fixed air purifying apparatus 1 implemented by the fans 106 and 131 and the fan housings 105 and 132 will be described.

The no-wind operation mode is referred to as a state where the flow rate of the clean air passing through the micro-hole 107 is low so that low noise and low power can be implemented. The no-wind operation mode may be performed by the first fan 106 and the first fan housing 105. Even in a state where both the fans 106 and 131 and the fan housings 105 and 132 are driven, the no-wind operation mode can be performed by lowering the rotation speed of the fan to the lowest.

The wind operation mode is a state where the flow rate of the clean air passing through the micro-hole 107 is high so that rapid air purifying is performed irrespective of the implementation of low noise and low power. The wind operation mode may be performed by the first fan 106 and the first fan housing 105. Even in a case where both the fan 106 and 131 and the fan housing 105 and 132 are driven, the wind operation mode can be performed by increasing the rotation speed of the fan.

The 24-hour air purifying mode is operated so that the air quality of the indoor space is always maintained at a constant level, and means that the air purifying apparatus is continuously operated even when the user does not recognize the on and off state of the air purifying apparatus.

The operation of the 24-hour air purifying mode is performed based on the no-wind operation mode. However, when a sudden increase in contaminants occurs, the user may be informed of the fact and the air purifying apparatus may proceed to the wind operation mode. The user can quickly operate the mobile air purifying apparatus 2 and 3 to remove contaminants.

In the 24-hour air purifying mode, the rotation speed of the fans 106 and 131 may be minimized so that a slight amount of air purifying is always performed. In the 24-hour air purifying mode, all light-emitting devices of the fixed air purifying apparatus 1 may be turned off.

The normal operation mode is to maintain the air quality at a predetermined level and drives the fan 106 as soon as possible to drive in the wind operation mode. It can be said that after the air purifying is performed quickly thereafter, the driving of the fan is stopped, the operation is carried out at a low speed, or the operation is continued to the proper state until there is a separate instruction from the user.

The no-wind operation mode, the wind operation mode, the 24-hour air purifying mode, and the normal operation mode can be performed by a user's selection.

In contrast to the various operation modes of the fixed air purifying apparatus, the mobile air purifying apparatus can perform the wind operation mode and the normal operation mode.

The various air purifying functions can be efficiently performed on the indoor space by the cooperation of the fixed air purifying apparatus and the mobile air purifying apparatus.

Fig. 8 is a block diagram of the fixed air purifying apparatus. In the description of the present block diagram, other numbers and names may be given even if they are the same or similar components as those already described for ease of understanding.

Referring to Fig. 8, each component is operated under the control of the control unit 10, and the operation of each component is described in a time series.

The user can set the operation mode through the operation unit 20. For example, a case of selecting the 24-hour air purifying mode will be described as an example. The control unit 10 receiving the input of the user reads the necessary information from the memory 17 and operates the fan selected from the first, second, and third fans 12, 13, and 14.

It can be understood that the first, second, and third fans 12, 13, and 14 refer to the fans 106 and 131 and the fan housing 105 and 132. Although two fans and fan housings have been described above, three fans and fan housings may be provided in the inner space of the fixed air purifying apparatus which is wide in the lateral direction.

In the 24-hour air purifying mode, the fan operates at a low speed so that the no-wind operation mode can be performed basically. Clean air can be discharged at a low speed through the micro-hole 15 in the no-wind operation mode.

The implementation of the 24-hour air purifying mode may be initially displayed on the display 18, and after a certain period of time has elapsed, the display may be turned off to remove the user's recognition.

During the performing of the 24-hour air purifying mode, the air quality measurement sensor 11 continuously measures the air quality. In a case where the measured air quality is bad, the no-wind operation mode may be terminated and the wind operation mode may be operated.

In a case where the wind operation mode of the fixed air purifying apparatus 1 is insufficient to improve the air quality, the display 18 may display the fact. At this time, the user can drive the mobile air purifying apparatus 2 and 3. In a case where the mobile air purifying apparatus 2 and 3 are far away, the mobile air purifying apparatus can be additionally driven by placing the mobile air purifying apparatus on the fixed air purifying apparatus 1 after the mobile air purifying apparatus brings conveniently by using the handle 33.

In a case where the communication means is provided between the mobile air purifying apparatus 2 and 3 and the fixed air purifying apparatus 1, the fixed air purifying apparatus 1 transmits a control signal and the mobile air purifying apparatus 2 and 3 receiving the control signal may be automatically operated.

In a case where the air quality is improved, the mode can be returned to the no-wind operation mode again.

When the mobile air purifying apparatus 2 and 3 is placed on the upper surface seating portion 104 of the fixed air purifying apparatus 1, the seating sensor 16 detects the state and notifies the control unit 10 of the detection result. The control unit 10 reads the necessary information from the memory 17 and controls the charging control unit 19 to start charging of the mobile air purifying apparatus 2 and 3. The charging degree can be displayed on the display 18.

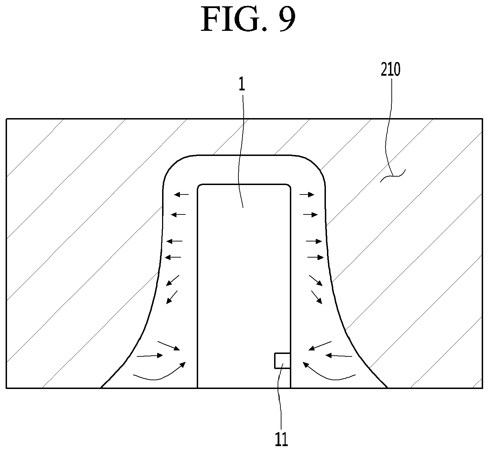

Fig. 9 is a view for explaining the operation of the no-wind operation mode.

Referring to Fig. 9, the fixed air purifying apparatus 1 is placed in predetermined control space. The fixed air purifying apparatus 1 discharges clean air at a small flow rate through the micro-hole 107 at the upper portion as illustrated in the drawing.

Clean air discharged through the micro-hole 107 advances with directionality only at a position close to the micro-hole 107 and immediately loses directionality thereof. This can be attributed to the low flow rate of the clean air to be discharged. As a result, the clean air is not directly affected by the region which is separated from the discharge wall 102 to some extent.

The space separated from the discharge wall 102 by a predetermined distance is a free region in which gas particles and foreign matters in the air are freely moved. The free region is a region where the Brownian motion of the gas and the foreign matters is performed and the free diffusion is performed and is referred to as the Brownian motion region 210.

The Brownian motion region 210 is spaced apart from the fixed air purifying apparatus 1 by a predetermined distance and has a boundary line. However, due to the relatively large flow rate of the suction port 110, the suction flow rate around the suction port 110 may be larger in the region close to the suction port 110 than in the Brownian motion. Accordingly, the Brownian motion region 210 can be reduced in a region close to the suction port 110.

According to the shape of the Brownian motion region 210, the following features are clear.

First, in the no-wind operation mode, the clean air discharged through the micro-hole 107 enters the Brownian motion region and does not return to the suction port 110 immediately.

Second, in the no-wind operation mode, since the air suctioned into the suction port 110 is mainly supplied in the Brownian motion region by a relatively large flow rate, the control space can be clean air as a whole when a predetermined time has elapsed.

Third, as the operation time of the no-wind operation mode elapses, heavy foreign matter falls freely, and the air enters the suction port 110 adjacent to the bottom of the control space and is filtered to maintain air purifying in the control space.

Fourth, the no-wind operation mode is suitable for maintaining a clean atmosphere in continuous control spaces in a low noise low power atmosphere.

With the above features, the air purification operation can be performed in the no-wind operation mode.

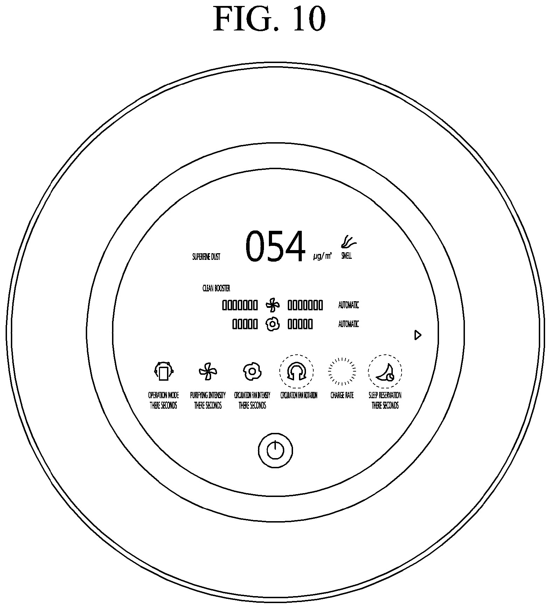

Fig. 10 is a plan view illustrating the display of the mobile air purifying apparatus.

Referring to Fig. 10, the mobile air purifying apparatus 2 and 3 have components in which independent operations can be performed. The mobile air purifying apparatus 2 and 3 can be driven at a separate place for a long time without the help of the fixed air purifying apparatus 1.

When the mobile air purifying apparatus 2 and 3 is charged by being placed on the upper surface of the fixed air purifying apparatus 1, the charging rate can also be displayed even on the display of the mobile air purifying apparatus 2 and 3.

The mobile air purifying apparatus 2 and 3 is placed at the correct position of the upper surface seating portion 104 so that the action of charging or the like can be performed smoothly. Even if the mobile air purifying apparatus 2 and 3 are placed on the upper surface seating portion 104, there is a possibility that the mobile air purifying apparatus 2 and 3 are reversed by an external impact.

Other embodiments which allow the user to more conveniently handle the mobile air purifying apparatus, including the above two problems, are presented below. In the following description, it is assumed that the portions which are not specifically described refer to the description already disclosed.

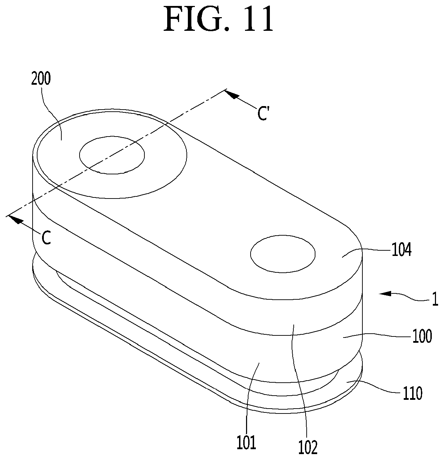

Fig. 11 is a perspective view of a fixed air purifying apparatus according to another embodiment.

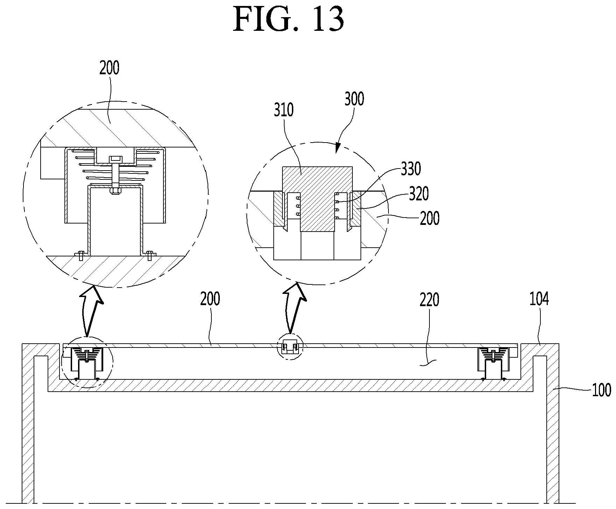

Referring to Fig. 11, a seating plate 200 on which the mobile air purifying apparatus 2 and 3 is placed is provided on an upper seating surface 104 of the fixed air purifying apparatus 1 according to the present embodiment, and a seating groove (see 220 in Fig. 13) providing a space in which the seating plate 200 is lifted and lowered in the vertical direction is provided on the upper seating surface 104.

The seating plate 200 may be provided slightly larger than the lower surface of the mobile air purifying apparatus so that the user can conveniently position the mobile air purifying apparatus 2 and 3 at a predetermined position. If the user approximately places the mobile air purifying apparatus in a relatively large area inside the seating plate 200, the mobile air purifying apparatus can move downward by the weight thereof. As a result, the user can position the mobile air purifying apparatus in the correct position even if only the approximate position selection is performed.

The mobile air purifying apparatus moved to the lower side can be supported on the inner wall of the seating groove 220. In a state of being supported on the inner wall, the mobile air purifying apparatus is prevented from being reversed and can maintain an original position thereof. In other words, even if there is a shock from the outside, the outer wall and bottom of the mobile air purifying apparatus and the inner wall and bottom of the seating groove correspond to each other to prevent reversal.

In the drawings, the seating plate is illustrated to be provided on the left side only, but not limited thereto, and a seating plate may be provided on the right side.

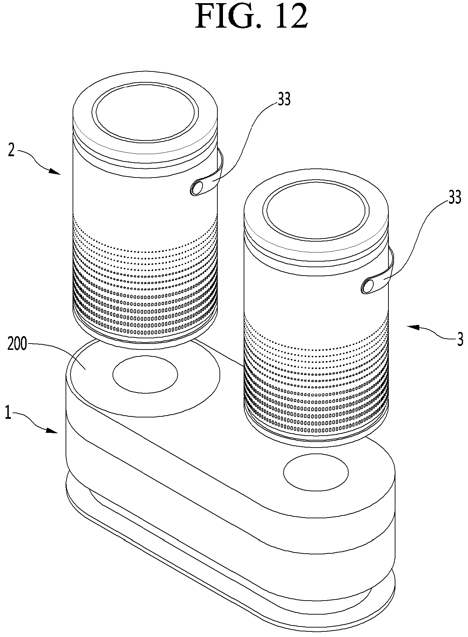

Referring to the usage state diagram of the seating plate illustrated in Fig. 12, it can be seen that the mobile air purifying apparatus 2 and 3 are placed on the seating plate 200.

Hereinafter, the configuration related to the seating plate and the seating groove will be described in more detail.

Fig. 13 is a sectional view partially cut along the upper seating surface C-C'.

Referring to Fig. 13, an upper seating surface 104 is provided at an upper-end of the outer wall 100, and a seating groove 220 is formed in a structure in which the upper surface of the upper seating surface 104 is recessed downwardly. Since the seating groove 220 is deeply dug downwardly the seating plate 200, the seating plate 200 can move within the seating groove 220 in the vertical direction.

The seating plate may be provided with a seating sensor 300 according to another embodiment to detect the fact that the mobile air purifying apparatus 2 and 3 is seated on the seating plate 200. When it is detected that the mobile air purifying apparatus is placed, a wireless charging operation or the like can be performed.

A lifting and lowering induction device 400 may be provided between the seating plate 200 and the seating groove 220. The lifting and lowering induction device guides the lifting and lowering of the seating plate so that the user can easily operate the lifting and lowering of the seating plate.

Meanwhile, in Fig. 13, the wireless charging module 121 may be provided below the bottom surface of the seating groove 220. However, the detailed description of the seating plate 200 is omitted in the following drawings.

The seating sensor 300 detects a state where the mobile air purifying apparatus is placed and may be provided in a structure which is installed so as to be capable of being vertically lifted and lowered through the inner spring 330 in a state where the detecting block 310 is inserted and installed in the housing 320. The seating sensor 300 can detect the seating of the mobile air purifying apparatus by the detecting block 310 detecting the contact of the external article, detecting the contraction and expansion of the internal spring 330, or detecting the slipping motion of the housing and the detecting block.

The seating sensor 300 may be installed in a state of passing through the center of the seating plate 200 and the detecting block 310 may be installed in a state of protruding from the upper surface of the seating plate 200. The user can intuitively understand that, by observing the seating sensor 300, the user can simply place the mobile air purifying apparatus about the seating sensor.

The lifting and lowering induction device 400 can smoothly lift and lower by controlling the seating plate 200 when the mobile air purifying apparatus 2 and 3 are seated. The lifting and lowering induction device 400 may include a support portion 410, a lifting and lowering portion 430, and an elastic member 420.

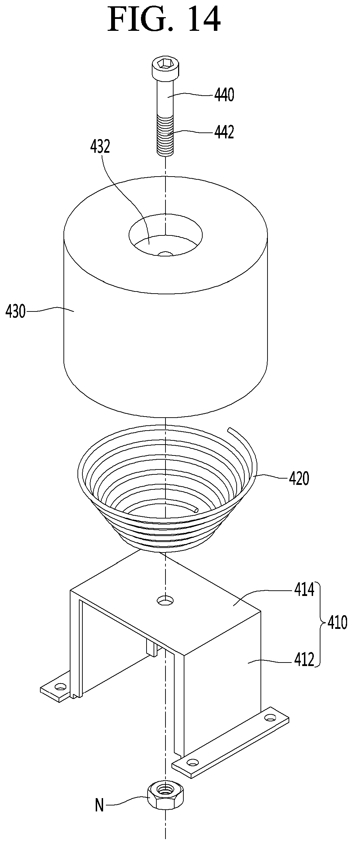

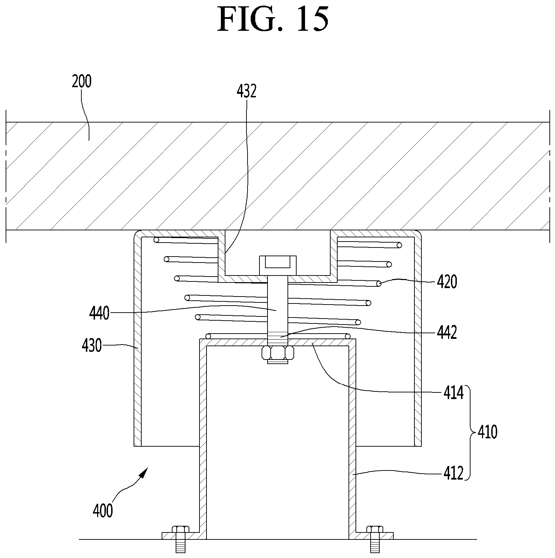

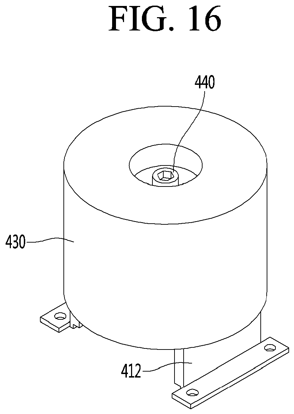

Fig. 14 is an exploded perspective view of the lifting and lowering induction device, Fig. 15 is a sectional view of the lifting and lowering induction device, and Fig. 16 is a perspective view of the lifting and lowering induction device.

Referring to Figs. 14 to 16, the support portion 410 serves as a substantial supporting function of the seating plate 200, and in a state where the two vertical supporting pieces 412 in the form of a plate face each other, the support portion stands on the bottom of the seating groove 220. The upper-end of each of the vertical support pieces 412 may have a structure connected to a horizontal support piece 414 in a state of being horizontal with the bottom of the seating plate 200.

The elastic member 420 serves to induce a stable lowering of the seating plate 200 and at the same time induce an automatic lifting of the seating plate 200, and the elastic member 420 may be a form of a general coil spring. The elastic member 420 may be provided in a structure in which the diameter decreases from the upper-end thereof to the lower end thereof. The lower end of the elastic member 420 may be seated on the horizontal support piece 414 of the support portion 410.

The lifting and lowering portion 430 constituting the lifting and lowering induction device 400 together with the elastic member 420 and the support portion 410 serves to substantially seating the seating plate 200 and to induce the lifting and lowering movement and may be provided with a cap structure in which the lower portion thereof is opened and the upper-end thereof is closed.

The lifting and lowering portion 430 may be installed in a state of covering the upper side of the support portion 410. A protrusion 432 protruding downward inward may be formed at the center of the upper surface of the lifting and lowering portion 430. As the protrusion 432 is inserted into the upper-end of the elastic member 420, the lifting and lowering portion 430 and the elastic member 420 can be stably coupled to each other.

In this state, the lifting and lowering portion 430 can be coupled to the support portion 410 through a separate guide rod 440. The guide rod 440 is formed in a circular rod shape, has a structure in which a thread 442 is formed at the lower end portion thereof, and can penetrate the elastic member 420 and the horizontal support piece 414 from the center of the lifting and lowering portion 430 at the same time. A separate nut N may be installed in a structure screwed to the lower end thread 442 of the guide rod 440 in a state where the guide rod 440 is passed.

Since the lifting and lowering induction device 400 is installed near each edge of the bottom of the seating plate 200 when viewed from above, the entire seating plate 200 can be stably supported. With this structure, the lifting and lowering portion 430 can have a structure capable of lifting and lowering.

When the mobile air purifying apparatus is placed on the seating plate, the mobile air purifying apparatus 2 and 3 can stably lower at a proper speed as the elastic member 420 is compressed in the lowering process. When the mobile air purifying apparatus is lifted from the seating plate, the guide rod 440 also lifts together with the lifting and lowering portion 430 during the lifting and lowering of the lifting and lowering portion 430 and the elastic member 420 is stretched and thus the lifting and lowering portion 430 can lift without shaking.

Hereinafter, the operation according to the embodiment and the effects generated in the process will be described.

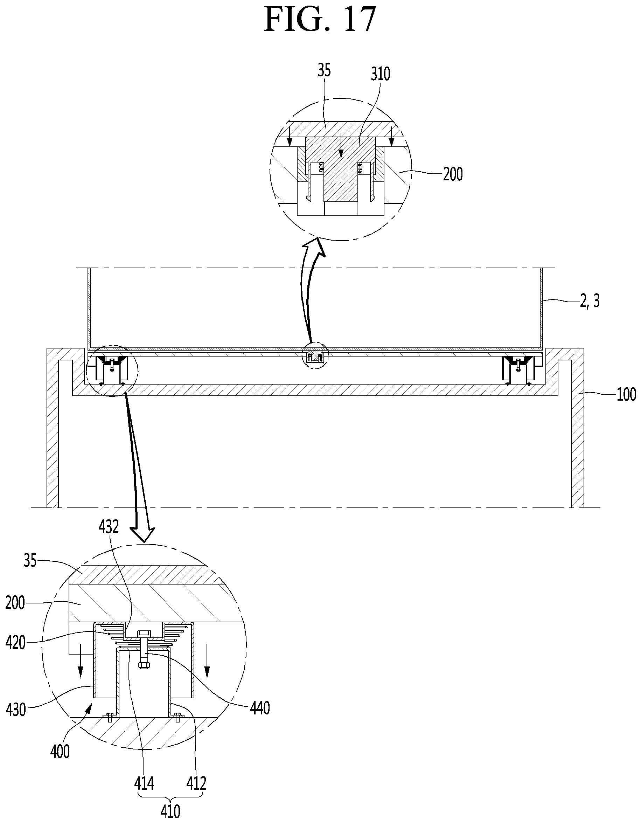

Fig. 17 is a view illustrating a state where the seating plate is moved to the lower side due to the weight of the mobile air purifying apparatus. The operation and effect of the present embodiment can be understood by comparing a state where the seating plate is moved upward, as illustrated in Fig. 13 and a state where the seating plate is moved to the lower side, as illustrated in Fig. 17.

When the mobile air purifying apparatus 2 and 3 is placed on the upper surface of the seating plate 200, the seating plate 200 is pressed by the weight of the mobile air purifying apparatus. As a result, the lifting and lowering portion 430 of the lifting and lowering induction device 400 is lowered downward.

As the lifting and lowering portion 430 lowers, the entire seating plate 200 can smoothly lower downward. As the inner elastic member 420 is compressed during the lowering of the lifting and lowering portion 430, the seating plate 200 can be stably and slowly lowered by the elastic force of the elastic member without abruptly lowering.

When the mobile air purifying apparatus 2 and 3 is lifted from the seating plate 200, the seating plate 200 can also move upward. As the lifting and lowering portion 430 is lifted, the entire seating plate 200 can smoothly lower downward. It is possible to prop a portion of the weight of the mobile air purifying apparatus 2 and 3 according to the elastic force of the inner elastic member 420 in the process of lifting the lifting and lowering portion 430. The user can lift the mobile air purifying apparatus with a small force.

In addition, the lifting and lowering induction device 400 may be provided at least two positions on the edge of the seating plate 200 to distribute the force. Accordingly, the inner surface of the seating groove 220 and the seating plate 200 may not be hooked. In other words, the pushing action of the elastic member 420 uniformly and totally acts on the edge of the seating plate 200. Accordingly, it is possible to prevent the side effect that the seating groove 220 and the seating plate 200 are partly hooked when the seating plate 200 is lifted and lowered.

Then, the mobile air purifying apparatus 2 and 3 can be supported on the inner surface of the seating groove 220 in a state where the mobile air purifying apparatus is completely inserted into the seating groove. Therefore, even if there is an impact from the outside, the mobile air purifying apparatus is not reversed, and stable standing can be maintained at the original position.

According to the present invention, it is possible to perform various air purifying actions corresponding to an indoor space by using a single air purifying system provided with a plurality of air purifying apparatus, so that industrial application is highly expected.

According to the present invention, stable handling of the mobile air purifying apparatus can be achieved, and a stable coupling with each other can be maintained in a case where a plurality of small air purifying apparatus are integrated.

According to the present invention, the mobile air purifying apparatus can be stably positioned, so that the mobile air purifying apparatus can be prevented from being reversed.

According to the present invention, the user can conveniently place the mobile air purifying apparatus on the suitable upper surface of the fixed air purifying apparatus, so that the handling thereof can be made convenient.

## Claims

1. An air purifying system comprising:
a fixed air purifying apparatus (1) having
an upper seating surface (104) at least a portion of which is provided in a flat manner, and
at least one seating groove (220) formed by the upper seating surface (104) being recessed downward; and
at least one mobile air purifying apparatus (2, 3) a base (35) of which is seated on the upper seating surface (104),
wherein the fixed air purifying apparatus (1) is provided with a filter (130) for filtering foreign matter and a fan (106), and
wherein the mobile air purifying apparatus (2, 3) is provided with a filter (44) for filtering foreign matter and a fan (41),
**characterized by**:
a seating plate (200) capable of being lifted and lowered inside the seating groove (220) and on which the mobile air purifying apparatus (2, 3) is placed, is provided on the upper seating surface (104) of the fixed air purifying apparatus (1) .

2. The air purifying system of claim 1,
wherein the upper seating surface (104) is provided to be long in a lateral direction, and
the air purifying system further comprises:
at least two mobile air purifying apparatuses (2, 3) spaced along the upper seating surface (104) in the lateral direction.

3. The air purifying system of claim 1 or 2, further comprising:
a first wireless charging module (121) provided on the upper seating surface (104); and
a second wireless charging module (38) provided in the base (35), corresponding to the first wireless charging module (121) .

4. The air purifying system of claim 3, further comprising:
a seating sensor (123) for detecting seating of the mobile air purifying apparatus (2, 3) at a location adjacent to the first wireless charging module (121).

5. The air purifying system of any one of claims 1 to 4, further comprising:
a handle (33) rotatably fastened to the mobile air purifying apparatus (2, 3).

6. The air purifying system of any one of claims 1 to 5, further comprising:
a lifting and lowering induction device (400) provided between the seating plate (200) and the seating groove (220) for inducing stable movement of the seating plate (200).

7. The air purifying system of claim 6,
wherein the lifting and lowering induction device (400) is provided at least at two places on an edge of the seating plate (200).

8. The air purifying system of claim 6 or 7,
wherein the lifting and lowering induction device (400) includes an elastic member (420) which provides a force pushing upward at the time of moving the seating plate (200) to the lower side.

9. The air purifying system of any one of claims 5 to 8,
wherein the seating plate (200) is provided with a seating sensor (300) for detecting seating of the mobile air purifying apparatus (2, 3).

10. The air purifying system of any one of claims 5 to 9,
wherein the fixed air purifying apparatus (1) is provided to be long in the lateral direction, and
wherein the seating groove (220) and the seating plate (200) are provided on the fixed air purifying apparatus (1) in the lateral direction one by one, respectively.

11. The air purifying system of any one of claims 1 to 10,
wherein the fixed air purifying apparatus (1) includes:
an outer wall (100) which receives the fan (106) and the filter (130) therein and extends in the vertical direction; and
a base (103) disposed below the outer wall (100) at a predetermined distance from the outer wall (100), and wherein the outer wall (100) includes:
a discharge wall (102) having a plurality of micro-holes (107) with small-diameter allowing communication between the inside and the outside of the outer wall (100) with each other at an upper portion of the outer wall (100) to flow out clean air discharged from the fan (106).

12. The air purifying system of claim 11,
wherein the filter (130) received in the outer wall (100) includes:
a side portion (132) corresponding to the outer wall (100); and
a lower portion (131) corresponding to the base (103) .

13. The air purifying system of claim 11 or 12, wherein the outer wall (100) includes:
a closed wall (101) which is provided at a lower portion of the discharge wall (102) and which is provided in a state where the outer wall (100) is closed.

14. The air purifying system of any one of claims 11 to 13,
wherein an upper portion of the discharge wall (102) and an edge of the upper seating surface (104) are sealed.

## Patentansprüche

1. Luftreinigungssystem, das aufweist:
eine feste Luftreinigungsvorrichtung (1) mit
einer oberen Auflageroberfläche (104), von der wenigstens ein Abschnitt in einer flachen Weise bereitgestellt ist, und
wenigstens einer Auflagernut (220), die durch die obere Auflageroberfläche (104) ausgebildet wird, die nach unten vertieft ist; und
wenigstens eine mobile Luftreinigungsvorrichtung (2, 3), von der ein Sockel (35) auf der oberen Auflageroberfläche (104) sitzt,
wobei die feste Luftreinigungsvorrichtung (1) mit einem Filter (130) zum Filtern von Fremdstoffen und einem Ventilator (106) versehen ist, und
wobei die mobile Luftreinigungsvorrichtung (2, 3) mit einem Filter (44) zum Filtern von Fremdstoffen und einem Ventilator (41) versehen ist,
**dadurch gekennzeichnet, dass**:
eine Auflagerplatte (200), die fähig ist, im Inneren der Auflagernut (220) angehoben und gesenkt zu werden, und auf der die mobile Luftreinigungsvorrichtung (2, 3) angeordnet ist, auf der oberen Auflageroberfläche (104) der festen Luftreinigungsvorrichtung (1) bereitgestellt ist.

2. Luftreinigungssystem nach Anspruch 1,
wobei die obere Auflageroberfläche (104) derart bereitgestellt ist, dass sie in einer seitlichen Richtung lang ist, und
wobei das Luftreinigungssystem ferner aufweist:
wenigstens zwei mobile Luftreinigungsvorrichtungen (2, 3), die entlang der oberen Auflageroberfläche (104) in der seitlichen Richtung beabstandet sind.

3. Luftreinigungssystem nach Anspruch 1 oder 2, das ferner aufweist:
ein erstes drahtloses Lademodul (121), das auf der oberen Auflageroberfläche (104) bereitgestellt ist; und
ein zweites drahtloses Lademodul (38), das entsprechend dem ersten drahtlosen Lademodul (121) in dem Sockel (35) bereitgestellt ist.

4. Luftreinigungssystem nach Anspruch 3, das ferner aufweist:
einen Auflagersensor (123) zum Erfassen des Sitzes der mobilen Luftreinigungsvorrichtung (2, 3) an einer Stelle benachbart zu dem ersten drahtlosen Lademodul (121).

5. Luftreinigungssystem nach einem der Ansprüche 1 bis 4, das ferner aufweist:
einen Griff (33), der drehbar an der mobilen Luftreinigungsvorrichtung (2, 3) befestigt ist.

6. Luftreinigungssystem nach einem der Ansprüche 1 bis 5, das ferner aufweist:
eine Hebe- und Senk-Induktionsvorrichtung (400), die zwischen der Auflagerplatte (200) und der Auflagernut (220) bereitgestellt ist, um die stabile Bewegung der Auflagerplatte (200) zu veranlassen.

7. Luftreinigungssystem nach Anspruch 6,
wobei die Hebe- und Senk-Induktionsvorrichtung (400) wenigstens an zwei Stellen auf einem Rand der Auflagerplatte (200) bereitgestellt ist.

8. Luftreinigungssystem nach Anspruch 6 oder 7,
wobei die Hebe- und Senk-Induktionsvorrichtung (400) ein elastisches Element (420) umfasst, das zur Zeit des Bewegens der Auflagerplatte (200) zu der unteren Seite eine nach oben drückende Kraft bereitstellt.

9. Luftreinigungssystem nach einem der Ansprüche 5 bis 8,
wobei die Auflagerplatte (200) mit einem Auflagersensor (300) versehen ist, um den Sitz der mobilen Luftreinigungsvorrichtung (2, 3) zu erfassen.

10. Luftreinigungssystem nach einem der Ansprüche 5 bis 9,
wobei die feste Luftreinigungsvorrichtung (1) derart bereitgestellt ist, dass sie in der seitlichen Richtung lang ist, und
wobei die Auflagernut (220) und die Auflagerplatte (200) jeweils eine nach der anderen in der seitlichen Richtung auf der festen Luftreinigungsvorrichtung (1) bereitgestellt sind.

11. Luftreinigungssystem nach einem der Ansprüche 1 bis 10,
wobei die feste Luftreinigungsvorrichtung (1) umfasst:
eine Außenwand (100), die den Ventilator (106) und den Filter (130) darin aufnimmt und sich in der Vertikalrichtung erstreckt; und
einen Sockel (103), der unter der Außenwand (100) in einem vorgegebenen Abstand von der Außenwand (100) angeordnet ist, und
wobei die Außenwand (100) umfasst:
eine Abgabewand (102) mit mehreren Mikrolöchern (107) mit kleinem Durchmesser, welche die Kommunikation zwischen dem Inneren und dem Äußeren der Außenwand (100) an einem oberen Abschnitt der Außenwand erlauben, damit von dem Ventilator (106) abgegebene saubere Luft ausströmt.

12. Luftreinigungssystem nach Anspruch 11,
wobei der in der Außenwand (100) aufgenommene Filter (130) umfasst:
einen Seitenabschnitt (132), welcher der Außenwand (100) entspricht; und
einen unteren Abschnitt (131), welcher dem Sockel (103) entspricht.

13. Luftreinigungssystem nach Anspruch 11 oder 12,
wobei die Außenwand (100) umfasst:
eine geschlossene Wand (101), die an einem unteren Abschnitt der Abgabewand (102) bereitgestellt ist und die in einem Zustand bereitgestellt ist, in dem die Außenwand (100) geschlossen ist.

14. Luftreinigungssystem nach einem der Ansprüche 11 bis 13,
wobei ein oberer Abschnitt der Abgabewand (102) und ein Rand der oberen Auflageroberfläche (104) abgedichtet sind.

## Revendications

1. Système de purification d'air comprenant :
un appareil de purification d'air fixe (1) comprenant
une surface d'appui supérieure (104) dont au moins une portion est réalisée de manière plate et
au moins une rainure d'appui (220) formée par la surface d'appui supérieure (104) en retrait vers le bas ; et
au moins un appareil de purification d'air mobile (2, 3) dont une base (35) est appuyée contre sur la surface d'appui supérieure (104),
dans lequel l'appareil de purification d'air fixe (1) est muni d'un filtre (130) pour le filtrage des substances étrangères et d'un ventilateur (106) et
dans lequel l'appareil de purification d'air mobile (2, 3) est muni d'un filtre (44) pour le filtrage des substances étrangères et d'un ventilateur (41),
**caractérisé par** :
une plaque d'appui (200) pouvant être levée et abaissée à l'intérieur de la rainure d'appui (220) et sur laquelle l'appareil de purification d'air mobile (2, 3) est placé, est prévue sur la surface d'appui supérieure (104) de l'appareil de purification d'air fixe (1).

2. Système de purification d'air selon la revendication 1,
dans lequel la surface d'appui supérieure (104) est réalisée de façon à être longue dans une direction latérale et
le système de purification d'air comprend en outre :
au moins deux appareils de purification d'air mobiles (2, 3) espacés le long de la surface d'appui supérieure (104) dans la direction latérale.

3. Système de purification d'air selon la revendication 1 ou 2, comprenant en outre :
un premier module de charge sans fil (121) disposé sur la surface d'appui supérieure (104) ; et
un deuxième module de charge sans fil (38) disposé dans la base (35), correspondant au premier module de charge sans fil (121).

4. Système de purification d'air selon la revendication 3, comprenant en outre :
un capteur d'appui (123) pour la détection de l'appui de l'appareil de purification d'air mobile (2, 3) à un endroit adjacent au premier module de charge sans fil (121).

5. Système de purification d'air selon l'une des revendications 1 à 4, comprenant en outre :
une poignée (33) fixée de manière rotative à l'appui de l'appareil de purification d'air mobile (2, 3).

6. Système de purification d'air selon l'une des revendications 1 à 5, comprenant en outre :
un dispositif d'induction de levage et d'abaissement (400) disposé entre la plaque d'appui (200) et la rainure d'appui (220) afin de provoquer un mouvement stable de la plaque d'appui (200).

7. Système de purification d'air selon la revendication 6,
dans lequel le dispositif d'induction de levage et d'abaissement (400) est disposé à au moins deux endroits sur un bord de la plaque d'appui (200).

8. Système de purification d'air selon la revendication 6 ou 7,
dans lequel le dispositif d'induction de levage et d'abaissement (400) comprend un élément élastique (420) qui exerce une force de poussée vers le haut au moment du déplacement de la plaque d'appui (200) vers le côté inférieur.

9. Système de purification d'air selon l'une des revendications 5 à 8,
dans lequel la plaque d'appui (200) est munie d'un capteur d'appui (300) pour la détection de l'appui de l'appareil de purification d'air mobile (2, 3).

10. Système de purification d'air selon l'une des revendications 5 à 9,
dans lequel l'appareil de purification d'air fixe (1) est réalisé de façon à être long dans la direction latérale et
dans lequel la rainure d'appui (220) et la plaque d'appui (200) sont disposées sur l'appareil de purification d'air fixe (1) dans la direction latérale un par un, respectivement.

11. Système de purification d'air selon l'une des revendications 1 à 10,
dans lequel l'appareil de purification d'air fixe (1) comprend :
une paroi externe (100) qui reçoit le ventilateur (106) et le filtre (130) et qui s'étend dans la direction verticale ; et
une base (130) disposée en dessous de la paroi externe (100) à une distance prédéterminée de la paroi externe (100) et dans lequel la paroi externe (100) comprend :
une paroi de refoulement (102) comprenant une pluralité de micro-trous (107) avec un petit diamètre, permettant une communication entre l'intérieur et l'extérieur de la paroi externe (100) au niveau d'une portion supérieure de la paroi externe (100) afin d'évacuer l'air pur refoulé par le ventilateur (106).

12. Système de purification d'air selon la revendication 11,
dans lequel le filtre (130) logé dans la paroi externe (100) comprend :
une portion latérale (132) correspondant à la paroi externe (100) ; et
une portion inférieure (131) correspondant à la base (103).

13. Système de purification d'air selon la revendication 11 ou 12, dans lequel la paroi externe (100) comprend :
une paroi fermée (101) qui est disposée au niveau d'une portion inférieure de la paroi de refoulement (102) et qui est mise dans un état où la paroi externe (100) est fermée.

14. Système de purification d'air selon l'une des revendications 11 à 13,
dans lequel une portion supérieure de la paroi de refoulement (102) et un bord de la surface d'appui supérieure (104) sont étanchéifiés.
